# EUROPEAN PATENT SPECIFICATION

(11) **EP 2 823 433 B1**
(45) Date of publication and mention of the grant of the patent: **14.10.2020**
(21) Application number: 13758583.2
(22) Date of filing: 06.03.2013
(51) Int. Cl.: G06F 21/81, G06F 21/44, G06F 1/26, G06F 1/16

(54) **ACCESSORY DEVICE AUTHENTICATION**
AUTHENTIFIZIERUNG EINER ZUSATZVORRICHTUNG
AUTHENTIFICATION DE DISPOSITIF ACCESSOIRE

(30) Priority: 06.03.2012 US 201261607451 P; 21.03.2012 US 201261613745 P; 14.05.2012 US 201213471405
(43) Date of publication of application: 14.01.2015
(73) Proprietor: Microsoft Technology Licensing, LLC, Redmond, WA 98052 (US)
(72) Inventor: BELESIU, Jim Tom, Redmond, Washington 98052-6399 (US); OBIE, Gene Robert, Redmond, Washington 98052-6399 (US); MARSHALL, James Charles, Redmond, Washington 98052-6399 (US); YOUNG, Robert D., Redmond, Washington 98052-6399 (US); SHERMAN, Nathan C., Redmond, Washington 98052-6399 (US); GIAIMO, Edward C., III, Redmond, Washington 98052-6399 (US); NEFF, David, Redmond, Washington 98052-6399 (US); SOUSA, Jose R., Redmond, Washington 98052-6399 (US)
(74) Representative: Goddar, Heinz J.
(86) International application number: PCT/US2013/029461
(87) International publication number: WO 2013/134438

(56) References cited:
- EP-A1- 1 667 306
- WO-A1-2009/020264
- JP-A- 2001 243 707
- KR-A- 20110 087 178
- US-A1- 2007 069 153
- US-A1- 2007 145 945
- US-A1- 2009 256 717
- US-A1- 2010 013 319
- US-A1- 2010 250 988
- US-A1- 2011 055 407

## Description

### BACKGROUND

Mobile computing devices have been developed to increase the functionality that is made available to users in a mobile setting. For example, a user may interact with a mobile phone, tablet computer, or other mobile computing device to check email, surf the web, compose texts, interact with applications, and so on. One challenge that faces developers of mobile computing devices is efficient power management and extension of battery life. For instance, a host device may supply an accessory device with power and/or draw power from an accessory device in different scenarios. However, enabling a device to give/receive power to any connected accessory device (e.g., an unauthorized device) may reduce battery life in unexpected ways and/or may be inefficient and even dangerous if power transfers are allowed to occur indiscriminately.

In this regard, US 2009/256717 A1 teaches a battery authentication system including a battery and an electronic device. The battery includes a battery authentication portion that includes battery identification information and performs authentication between the battery and the electronic device. The electronic device includes: a power source that supplies electric power from the battery to respective portions in the electronic device; a storage portion that stores the battery identification information of usable batteries; a device authentication portion that performs authentication of the battery; and a control portion that compares the battery identification information of the battery with the battery identification information stored in the storage portion. The control portion compares the battery identification information of the battery authenticated successfully in the device authentication portion with the battery identification information stored in the storage portion, and controls the power source based on a result of the comparison. Thus, it is possible to recognize whether a battery mounted is authenticated or not, and accordingly to determine whether the battery can be used or not. Therefore, it is possible to permit the use of a genuine battery and a non-genuine battery and to eliminate a counterfeit battery.

Moreover, EP 1667306 A1 teaches a battery pack having a secondary battery and a circuit that controls charging and discharging of the secondary battery. The battery pack has a computer and a charging control section. The computer communicates with another computer disposed in a charging device and authenticates the charging device. The charging control section, controlled by the computer, supplies a charging current to the secondary battery when the charging device has been successfully authenticated and shuts off the charging current when the charging device has not been successfully authenticated.

Furthermore, US 2010/250988 A1 teaches a TV plugin module which is shut down if it cannot be authenticated to enforce the usage of authorized plugin modules.

In addition, JP 2001/243707 A teaches an information transmission and reception system in which a personal computer and a portable audio player are connected via USB cable. The devices perform mutual authentication and power is supplied through the USB cable in accordance with the authentication result to allow transmission of data whose copyrights should be protected, such as audio data.

### SUMMARY

The invention is defined by the appended independent claims. Accessory device authentication techniques are described. In one or more embodiments, connection of an accessory device to a host computing device is detected. Responsive to the detection, an authentication sequence may occur to verify an identity and/or capabilities of the accessory device. Upon successful authentication of the accessory device, the host device may authorize the accessory device for power exchange interactions with the host device. The host device may then draw supplemental power from a power source associated with the authorized accessory device, such as a battery or power adapter. The host device may also enable the accessory device to obtain and use power supplied by the host device in some scenarios. Power exchange between a host device and an authorized accessory may be managed in accordance with capabilities of the accessory device that are identified during authentication.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

### BRIEF DESCRIPTION OF THE DRAWINGS

The detailed description is described with reference to the accompanying figures. In the figures, the left-most digit(s) of a reference number identifies the figure in which the reference number first appears. The use of the same reference numbers in different instances in the description and the figures may indicate similar or identical items. Entities represented in the figures may be indicative of one or more entities and thus reference may be made interchangeably to single or plural forms of the entities in the discussion.
FIG. 1 is an illustration of an environment in an example implementation that is operable to employ the techniques described herein.
FIG. 2 depicts an example implementation of an accessory device of FIG. 1 as showing a interface in greater detail.
FIG. 3 depicts an example implementation showing a perspective view of a connecting portion of FIG. 2 that includes mechanical coupling protrusions and a plurality of communication contacts.
FIG. 4 depicts an example computing device and accessory device of FIG. 1 in greater detail.
FIG. 5 depicts an example procedure in accordance with one or more embodiments.
FIG. 6 illustrates an example system including various components of an example device that can be implemented as any type of computing device to implement embodiments of the techniques described herein.

### DETAILED DESCRIPTION

### Overview

Indiscriminately enabling accessory devices to exchange power with a host device may reduce battery life in unexpected ways and/or may be inefficient and even dangerous if power transfers occur between the host and incompatible device.

Accessory device authentication techniques are described. In one or more embodiments, connection of an accessory device to a host computing device is detected. Responsive to the detection, an authentication sequence may occur to verify an identity and/or capabilities of the accessory device. Upon successful authentication of the accessory device, the host device may authorize the accessory device for power exchange interactions with the host device. The host device may then draw supplemental power from a power source associated with the authorized accessory device, such as a battery or power adapter. The host device may also enable the accessory device to obtain and use power supplied by the host device in some scenarios. Power exchange between a host device and an authorized accessory may be managed in accordance with capabilities of the accessory device that are identified during authentication.

In the following discussion, an example environment and devices are first described that may employ the techniques described herein. Example procedures are then described which may be performed in the example environment and by the devices as well as in other environments and by other devices. Consequently, performance of the example procedures is not limited to the example environment/devices and the example environment/devices are not limited to performance of the example procedures.

### Example Operating Environment

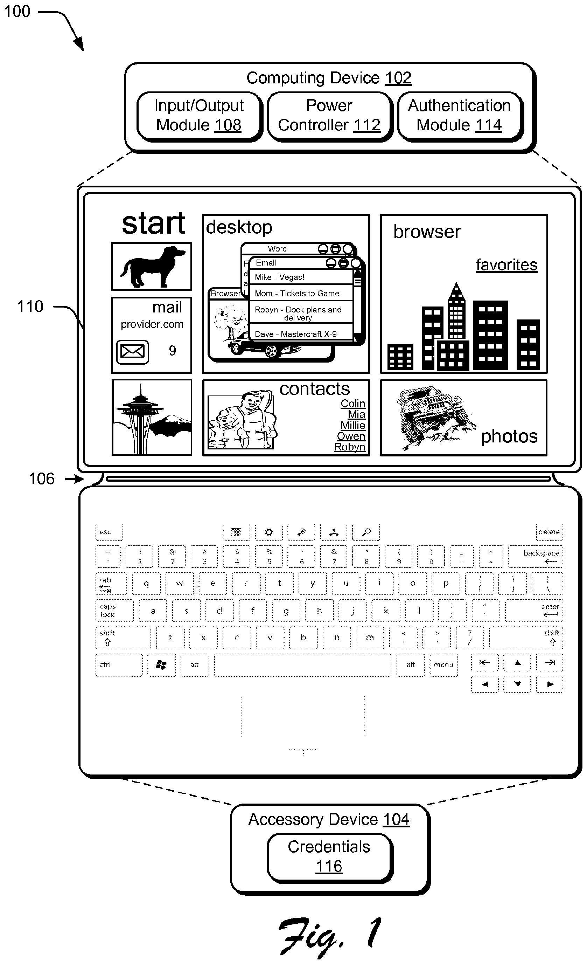

FIG. 1 is an illustration of an environment 100 in an example implementation that is operable to employ the techniques described herein. The illustrated environment 100 includes an example of a computing device 102 that is physically and communicatively coupled to an accessory device 104 via a flexible hinge 106. The computing device 102 may be configured in a variety of ways. For example, the computing device 102 may be configured for mobile use, such as a mobile phone, a tablet computer as illustrated, and so on. Thus, the computing device 102 may range from full resource devices with substantial memory and processor resources to a low-resource device with limited memory and/or processing resources. The computing device 102 may also relate to software that causes the computing device 102 to perform one or more operations.

The computing device 102, for instance, is illustrated as including an input/output module 108. The input/output module 108 is representative of functionality relating to processing of inputs and rendering outputs of the computing device 102. A variety of different inputs may be processed by the input/output module 108, such as inputs relating to functions that correspond to keys of the input device, keys of a virtual keyboard displayed by the display device 110 to identify gestures and cause operations to be performed that correspond to the gestures that may be recognized through the accessory device 104 and/or touchscreen functionality of the display device 110, and so forth. Thus, the input/output module 108 may support a variety of different input techniques by recognizing and leveraging a division between types of inputs including key presses, gestures, and so on.

In the illustrated example, the accessory device 104 is a device configured as a keyboard having a QWERTY arrangement of keys although other arrangements of keys are also contemplated. Further, other non-conventional configurations for an accessory device 104 are also contemplated, such as a game controller, configuration to mimic a musical instrument, a power adapter, and so forth. Thus, the accessory device 104 may assume a variety of different configurations to support a variety of different functionality. Different accessory devices may be connected to the computing device at different times.

As previously described, the accessory device 104 is physically and communicatively coupled to the computing device 102 in this example through use of a flexible hinge 106. The flexible hinge 106 represents one illustrative example of an interface that is suitable to connect and/or attach and accessory device to a host computing device 102. The flexible hinge 106 is flexible in that rotational movement supported by the hinge is achieved through flexing (e.g., bending) of the material forming the hinge as opposed to mechanical rotation as supported by a pin, although that embodiment is also contemplated. Further, this flexible rotation may be configured to support movement in one direction (e.g., vertically in the figure) yet restrict movement in other directions, such as lateral movement of the accessory device 104 in relation to the computing device 102. This may be used to support consistent alignment of the accessory device 104 in relation to the computing device 102, such as to align sensors used to change power states, application states, and so on.

The flexible hinge 106, for instance, may be formed using one or more layers of fabric and include conductors formed as flexible traces to communicatively couple the accessory device 104 to the computing device 102 and vice versa. This communication, for instance, may be used to communicate a result of a key press to the computing device 102, receive power from the computing device, perform authentication, provide supplemental power to the computing device 102, and so on. The flexible hinge 106 or other interface may be configured in a variety of ways to support multiple different accessory devices 104, further discussion of which may be found in relation to the following figure.

As further illustrated in FIG. 1 the computing device 102 may include a power controller 112 and an authentication module 114 configured to implement aspects of accessory device authentication techniques described herein. In particular, the power controller 112 represents functionality to perform various operations for power management. This may include management of different power sources and switching between the sources, implementing a defined and/or selected power management scheme, managing battery life, and so forth. The power controller 112 may also facilitate connections and communications to make use of power available via a suitable power source, such as a wall socket, internal/external battery, power supply unit, and so forth. The power controller 112 may also be operable to supply power to accessory devices that are authorized in appropriate circumstances. In other words, the power controller 112 may manage power operations jointly for a host computing device and authorized accessory devices including power exchange between the host computing device and an authorized accessory device.

The authentication module 114 represents functionality operable to authenticate accessory devices when the devices are attached/connected to the computing devices. The authentication module 114 may be configured to implement a variety of different authentication techniques. Generally speaking, the authentication module 114 performs an authentication sequence in which credentials 116 (e.g., device ID/password, alphanumeric code, etc.) associated with an accessory device 104 are obtained and verified. The accessory device 104 in FIG. 1 is illustrated as including example credentials 116, which may be provided to the authentication module 114 for authentication upon request. If the credentials are valid (e.g., the device is a recognized device that has associated privileges), the authentication is considered successful and the accessory device 104 may be authorized for power exchange through the power controller 112 and other interaction with the computing device 102. On the other hand, if the credentials are not valid, interaction of the accessory device 104 with the computing device 102 may be restricted in various ways and/or prevented. Thus, the authentication module 114 prevents unauthorized devices from supplying/using power in ways that may be inefficient and/or unsafe. Additional details regarding techniques suitable to authenticate an accessory device can be found in relation to the following figures.

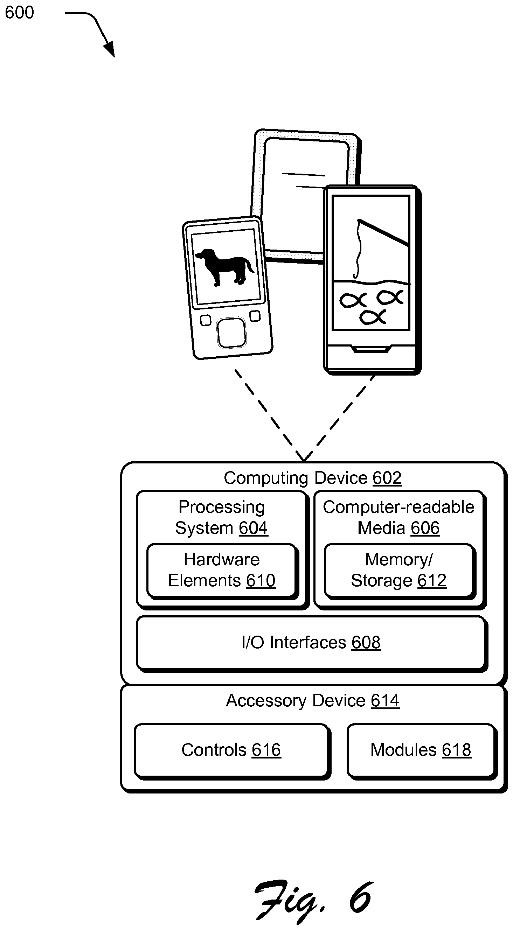

The power controller 112 and authentication module 114 may be implemented in hardware, software, firmware and/or combinations thereof. By way of example and not limitation, the computing device 102 may include one or more microcontrollers and/or other suitable hardware logic devices configured to implement at least some of the functionally that is described herein in relation to power controller 112 and authentication module 114. In addition or alternatively, the power controller 112 and/or authentication module 114 may be implemented by way of a processing system of the device and one or more program modules that are executable/operable via the processing system. In addition, functionality of the power controller 112 and authentication module 114 may be provided via separate components/modules (as illustrated) or as combined functionality provided by the same module and/or microcontroller. Further description of example implementations suitable for these and other described modules/functionality can be found below in relation to the discussion of an example computing device depicted in FIG. 6.

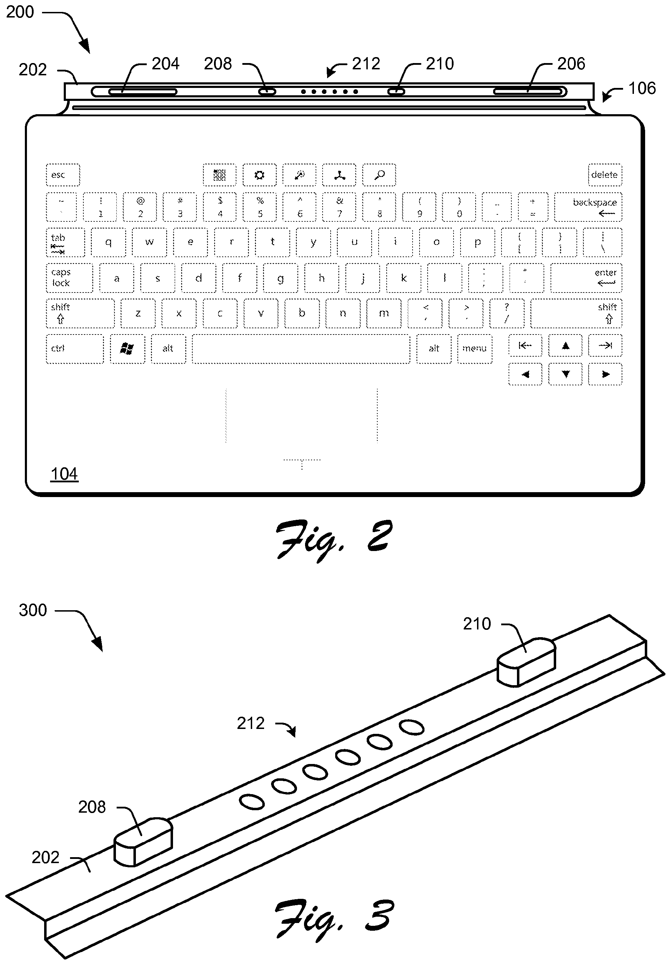

FIG. 2 depicts an example implementation 200 of the accessory device 104 of FIG. 1 as showing the flexible hinge 106 in greater detail. In this example, a connection portion 202 of the input device is shown that is configured to provide a communicative and physical connection between the accessory device 104 and the computing device 102. In this example, the connection portion 202 has a height and cross section configured to be received in a channel in the housing of the computing device 102, although this arrangement may also be reversed without departing from the scope thereof. The connection portion 202 provides an interface through which attachment/connection of the accessory device 104 to the computing device may be detected. In at least some embodiments, this interface enables communications for authentication of the accessory device 104 as described herein. For example, the computing device 102 may receive credentials 116 and other data regarding capabilities of the accessory device through the interface responsive to detecting the presence/attachment of the accessory device 104. The interface may also provide a power coupling for exchange of power.

The connection portion 202 is flexibly connected to a portion of the accessory device 104 that includes the keys through use of the flexible hinge 106. Thus, when the connection portion 202 is physically connected to the computing device the combination of the connection portion 202 and the flexible hinge 106 supports movement of the accessory device 104 in relation to the computing device 102 that is similar to a hinge of a book.

For example, in at least some implementations, rotational movement may be supported by the flexible hinge 106 such that the accessory device 104 may be placed against the display device 110 of the computing device 102 and thereby act as a cover. The accessory device 104 may also be rotated so as to be disposed against a back of the computing device 102, e.g., against a rear housing of the computing device 102 that is disposed opposite the display device 110 on the computing device 102.

Naturally, a variety of other orientations are also supported. For instance, the computing device 102 and an accessory device 104 may assume an arrangement such that both are laid flat against a surface as shown in FIG. 1. In another instance, a typing arrangement may be supported in which the accessory device 104 is laid flat against a surface and the computing device 102 is disposed at an angle to permit viewing of the display device 110, e.g., such as through use of a kickstand disposed on a rear surface of the computing device 102. Other instances are also contemplated, such as a tripod arrangement, meeting arrangement, presentation arrangement, and so forth.

The connecting portion 202 is illustrated in this example as including magnetic coupling devices 204, 206, mechanical coupling protrusions 208, 210, and a plurality of communication contacts 212. The magnetic coupling devices 204, 206 are configured to magnetically couple to complementary magnetic coupling devices of the computing device 102 through use of one or more magnets. In this way, the accessory device 104 may be physically secured to the computing device 102 through use of magnetic attraction.

The connecting portion 202 also includes mechanical coupling protrusions 208, 210 to form a mechanical physical connection between the accessory device 104 and the computing device 102. The mechanical coupling protrusions 208, 210 are shown in greater detail in the following figure.

FIG. 3 depicts an example implementation 300 shown a perspective view of the connecting portion 202 of FIG. 2 that includes the mechanical coupling protrusions 208, 210 and the plurality of communication contacts 212. As illustrated, the mechanical coupling protrusions 208, 210 are configured to extend away from a surface of the connecting portion 202, which in this case is perpendicular although other angles are also contemplated. Mechanical coupling protrusions 208, 210 that are configured in this manner may be referred to as "fangs" due to the way in which they extend away from a surface of the connecting portion 202.

The mechanical coupling protrusions 208, 210 are configured to be received within complimentary cavities within the channel of the computing device 102. When so received, the mechanical coupling protrusions 208, 210 promote a mechanical binding between the devices when forces are applied that are not aligned with an axis that is defined as correspond to the height of the protrusions and the depth of the cavity. In at least some embodiments, the mechanical coupling protrusions 208, 210 may also be configured to form a power coupling through which power exchanges described herein may occur.

For example, when a force is applied that does coincide with the longitudinal axis described previously that follows the height of the protrusions and the depth of the cavities, a user overcomes the force applied by the magnets solely to separate the accessory device 104 from the computing device 102. However, at other angles the mechanical coupling protrusion 208, 210 are configured to mechanically bind within the cavities, thereby creating a force to resist removal of the accessory device 104 from the computing device 102 in addition to the magnetic force of the magnetic coupling devices 204, 206. In this way, the mechanical coupling protrusions 208, 210 may bias the removal of the accessory device 104 from the computing device 102 to mimic tearing a page from a book and restrict other attempts to separate the devices.

The connecting portion 202 is also illustrated as including a plurality of communication contacts 212. The plurality of communication contacts 212 is configured to contact corresponding communication contacts of the computing device 102 to form a communicative coupling between the devices. As mentioned, the communicative coupling may be used to convey credentials and/or other information that may be employed by the computing device 102 and in particular the authentication module 114 to authenticate an accessory device 104. The communication contacts 212 may be configured in a variety of ways, such as through formation using a plurality of spring loaded pins that are configured to provide a consistent communication contact between the accessory device 104 and the computing device 102. Therefore, the communication contacts may be configured to remain during minor movement or jostling of the devices. A variety of other examples are also contemplated, including placement of the pins on the computing device 102 and contacts on the accessory device 104, incorporating at least some communication contacts 212 with the mechanical coupling protrusions 208, 210 and/or complimentary cavities, and so forth. Moreover, in addition or alternatively to forming a power coupling through mechanical coupling protrusions 208, 210 (e.g., fangs) as mentioned above, at least some of the communication contacts 212 may be configured to create a power coupling suitable for power exchange.

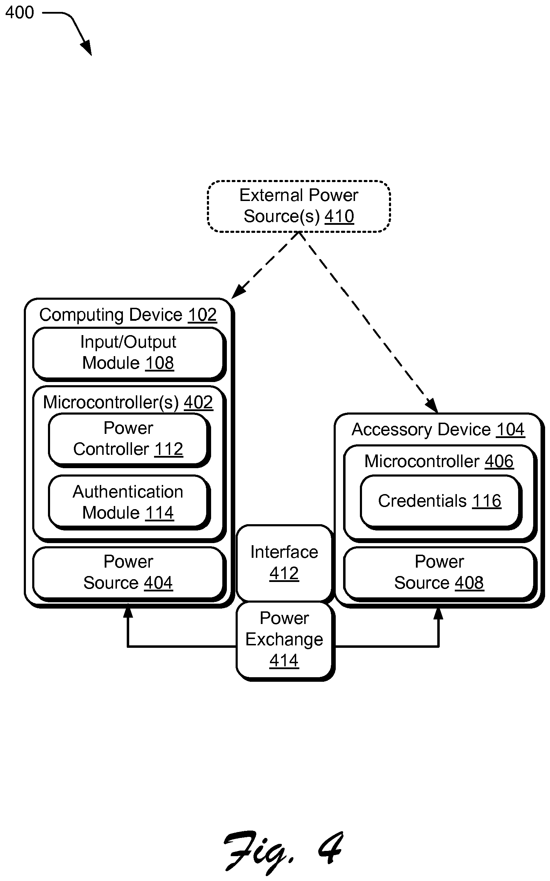

FIG. 4 depicts generally at 400 an example computing device 102 and accessory device 104 in greater detail. In FIG. 4, the computing device 104 is depicted as having a power controller 112 and authentication module 114 that are illustrated as being provided by one or more microcontrollers 402. In one embodiment, different microcontrollers may be employed to implement the power controller 112 and authentication module 114. In another approach, one microcontroller may be configured to implement functionality of both the power controller 112 and authentication module 114. The computing device 104 further includes an associated power source 404, such as one or more internal batteries.

The accessory device is also depicted as having a respective microcontroller 406 and its own power source 408 (e.g. an accessory battery) that is separate from the power source 404 of the computing device 102. As further illustrated, both the computing device 102 and accessory device 104 may also be configured to employ external power sources 410, such as through the use of respective power adapters connected to a wall socket or other source.

The example microcontrollers represent hardware devices/systems that are designed to perform a predefined set of designated tasks. Microcontrollers may represent respective on-chip systems/circuits having self-contained resources such as processing components, I/O devices/peripherals, various types of memory (ROM, RAM, Flash, EEPROM), programmable logic, and so forth. Different microcontrollers may be configured to implement embedded applications/functionality that are implemented at least partially in hardware and perform corresponding tasks.

In particular, the example microcontrollers 402, 406 enable performance of tasks for device authentication and power management outside of operation of a general purpose processing system and other applications/components of the computing device or accessory device. Generally, power consumption of the microcontrollers is low in comparison with operating a general purpose processing system for a device.

Accordingly, when implemented via microcontrollers, the power controller 112 and authentication module 114 may operate using relatively low power, independently of operating a "primary" processing system of a host computing device, and/or without booting/executing an operating system or using other device components and applications. In other words, the microcontrollers may operate to perform authentication and some power management tasks in a low power mode without having to operate or supply power to the processing system and other device components (e.g., device memory, network interface, display device, etc.) and/or without completely starting-up or waking-up the computing device.

Generally speaking, the authentication of an accessory device as described above and below is a prerequisite to power exchange between an accessory device and host computing device. When either the computing device 102 or accessory device 104 has little or no available power (e.g., battery drained and no connection to an external source), though, a limited amount of power exchange may be allowed to enable interactions for authentication and/or subsequent power management decisions. For example, enough power to operate the power controller 112 and/or authentication module 114 may be supplied by an accessory device when the host device otherwise does not have sufficient power. Likewise, the host device may supply power sufficient to run a microcontroller 406 of an accessory device 104 to obtain credentials from the accessory device 104 used for authentication of the device. The amount of power exchanged during such interactions may be limited in various ways including restricting power to a designated power level (e.g., voltage/current) and/or setting a time limit on the power exchange. In one particular example, a maximum of approximately five hundred milliwatts at five volts is designated for initial authentication/power management interactions between a host device and accessory. A relatively small time limit such as thirty seconds or one minute may also be imposed. In this manner, unauthorized devices may exchange a limited amount of power initially to enable authentication and at least some basic power management tasks. Accordingly, the techniques for accessory device authentication may be employed in cold boot situations in which either the host or accessory is in a drained battery state and therefore may be inoperable without supplemental power.

As further depicted in FIG. 4, the computing device 102 and accessory device 104 may be attached and connected via a suitably configured interface 412, one example of which is the connection portion 202 previously described. The interface 412 may be configured to create a communicative and physical coupling between the computing device 102 and accessory device 104. The interface 412 is also configured to enable power exchange 414 to occur between the computing device 102 and accessory device 104. Additional details of these and other aspects of accessory device authentication are provided in relation to following example procedures.

Having considered the preceding discussion of an example operating environment and devices, consider now a discussion of an example procedure which includes further implementation details regarding the example techniques for accessory device authentication.

### Example Procedures

The following discussion describes accessory device authentication techniques that may be implemented utilizing the previously described systems and devices. Aspects of each of the procedures may be implemented in hardware, firmware, software, or a combination thereof. The procedures are shown as a set of blocks that specify operations performed by one or more devices and are not necessarily limited to the orders shown for performing the operations by the respective blocks. In portions of the following discussion, reference may be made to the example operating environment 100 of FIG. 1 and the example devices of FIGS. 2-4, respectively.

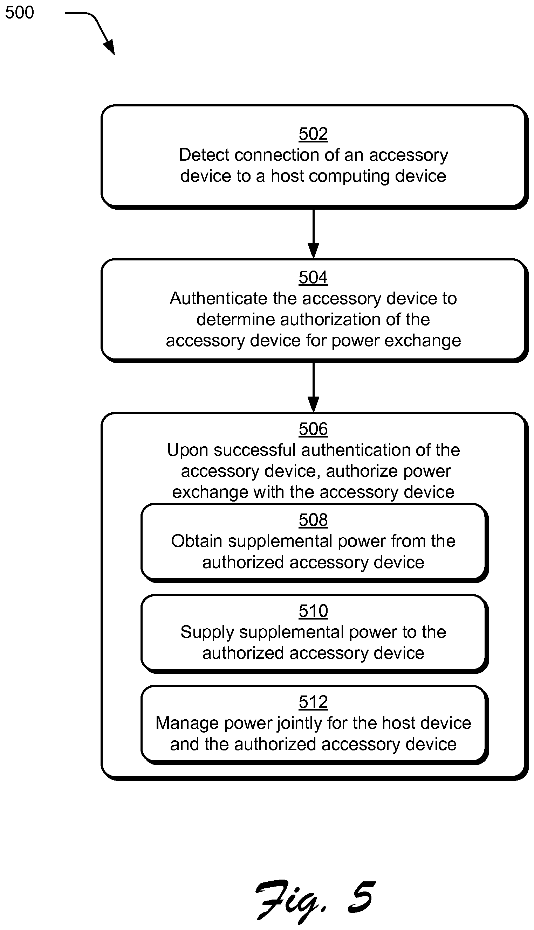

FIG. 5 depicts an example procedure 500 in which an accessory device is authenticated. In at least some embodiments, the procedure may be performed by a suitably configured computing device, such as the example computing device 102 of FIG. 4 that includes or otherwise make use of one or more microcontrollers 402.

Connection of an accessory device to a host computing device is detected (block 502). For example, a computing device 102 may employ various techniques to detect when an accessory device is attached. One way this may occur is through communicative couplings formed when the accessory device is attached. For instance, communication contacts 212 incorporated with an interface 412 may cause an attach event to be generated when an accessory device is attached. By way of example, an attach event may be generated when fangs used to physically join the host and accessory are mated with corresponding cavities. A detach event may be generated when the accessory device is subsequently detached. As mentioned, the fangs may be on the device and cavities on the host, or vice versa. In another approach, an interface 412 may incorporate a switch that operates when an accessory device is physically attached. Toggling of the switch may cause an attach event to be produced when an accessory is connected. Other kinds of presence detectors may also be employed to detect attachment of an accessory, such as an optical sensor, spring loaded button, a signal detector, and so forth.

When an appropriate attach event is generated in these or another suitable manner, the attach event may be detected by the computing device 102. For example, the power controller 112 of a computing device (e.g., a microcontroller 402) may detect attach events and initiate appropriate actions to authenticate the accessory device 104 in response to the detection. This may involve invoking the authentication module 114 to perform the authentication of the accessory device 104. If the host device is in a drained battery state, a limited amount of power may first be supplied to the host device by the accessory as previously described. The limited amount of power may be sufficient to boot and operate the power controller 112, authentication module 114, and/or corresponding microcontrollers 402. The power controller 112 may then look for attached devices and initiate authentication if appropriate.

In particular, the accessory device is authenticated to determine authorization of the accessory device for power exchange (block 504). As mentioned, authentication of the accessory device 104 may occur in various ways based on credentials 116 associated with the accessory device 104. The authentication may occur based upon I/O communications between microcontroller(s) 402 and a microcontroller 406 of the host computing device and accessory, respectively. Such communications may occur via communication contacts 212 that create a communicative coupling as described previously. For example, communication contacts 212 may create a communication channel that may be employed for authentication interactions by way of a single pin or multiple pin connection between the host computing device and accessory.

In at least some embodiments, the authentication module 114 may operate under the direction of the power controller 112 to request or otherwise obtain credentials 116 from the accessory device 104 via a suitable communication channel. The authentication module 114 may then verify the credentials to ensure that the accessory device 104 is an authorized device. The authentication module 114 may provide a notification with the authentication result or otherwise expose a result of authentication to the power controller 112 for subsequent power management decisions. The power controller 112 and/or authentication module 114 may also identify capabilities of the accessory such as identifying the type of device (e.g., keyboard, game controller, mouse, musical device, adapter, etc.), whether the accessory has a battery, the charge state of an accessory battery, power supply capabilities/ranges, and so forth. The power controller 112 may employ the identified capabilities to make the power management decisions and implement an appropriate power management scheme.

Various authentication techniques and credentials may be employed. By way of example and not limitation, authentication may be based upon a username and password, a unique device identifier such as a media access control (MAC) address, an alphanumeric code, an encrypted secret, or other suitable credentials. In some embodiments, the credentials may be encoded using a designated hash algorithm such as MD5 message digest algorithm or SHA-1 hash algorithm to name a few examples. The authentication module 114 may be configured to decode/check the credentials using the designated hash algorithm. The authentication module 114 may also compare the credentials to a list/database of known credentials for authorized devices. Authentication is successful when the authentication module 114 matches the credentials to known credentials for authorized devices. If credentials do not match, then the authentication is unsuccessful. In this case, exchange of power may be prevented or restricted to specified levels as discussed previously.

Upon successful authentication of the accessory device, exchange of power with the accessory device is authorized (block 506). This may include authorizing the host device to obtain supplemental power from the authorized accessory device (block 508) and/or authorizing the host device to supply supplemental power to the authorized accessory device (block 510). For example, the power controller 112 may determine power states for the accessory device and host device and manage exchange of power between the devices accordingly. Based on a determination that supplemental power for the host device is available from the accessory, power may be exchanged from the accessory to the host. Likewise, based in a determination that the accessory lacks sufficient power to operate, the power controller 112 may cause power to be exchanged from the host computing device to the accessory. Further, power is managed jointly for the host device and the authorized accessory device (block 512).

In particular, the power controller 112 may operate to selectively manage power from various available sources including supplemental power available from an accessory device 104. The power controller 112 may manage power in accordance with an overall power management scheme for the computing device as discussed in greater detail below.

In general, authorized devices may supply or receive power within a "normal" operating power range/mode whereas unauthorized devices may be restricted to a limited power range/mode. Thus, an authorized accessory device may exchange power with a host computing at "normal" levels and/or within specified ranges designed for the system. In contrast, exchange of power with unauthorized may be restricted to particular scenarios, limited power ranges, and/or time limits. By way of example and not limitation, the power system may be configured to support an operating power mode that provides approximately forty watts continuous at a maximum of five amps. The power system may further be configured to enforce a limited power mode as mentioned above in which power exchange is limited to approximately five hundred milliwatts at approximately five volts. In the limited power mode the power exchange may also be limited by a selected time limit such as thirty seconds, a minute, and so forth. The time limit may be selected to provide sufficient time to initiate/perform authentication and switch to the operating power mode if appropriate. If authentication is not successful within the time limit, further power exchange with the accessory device may be prevented. A variety of different configurations and particular power levels for different power modes are contemplated of which the enumerated configurations are but a few illustrative examples.

In accordance with the foregoing, a computing device 102 may include a power controller 112 configured to implement a power management scheme for the device. In general, the power controller 112 is responsible for selective switching between multiple available power sources as well as charging of internal and accessory batteries. Available power sources may include power from an internal battery, a power supply adapter connected to an external source, and/or a battery of an authorized accessory device. The power controller 112 may include or make use of an authentication module 114 to authenticate accessory devices 104 and authorize power exchange with the accessory devices 104. The power controller 112 further operates to restrict power exchange with unauthorized devices.

Once an accessory device is authenticated/authorized, though, the power controller 112 may manage power for the accessory device jointly with the host computing device 102 in accordance with a power management scheme. Some example details and characteristics of a power management scheme that may be implemented by the power controller 112 are now described.

The power management scheme provides dynamic switching between available power sources (including power from authorized accessories) to maintain uninterruptible power to the load. In the event of a failure of either the external power adapter or internal battery power the system may automatically shift to an alternate available power source without user intervention. The power controller 112 operates to prevent power exchange with any accessory device unless the accessory device has passed authentication as described above. Authentication is typically completed in response to attachment of the accessory to the host. Re-authentication may also be configured to occur when the accessory device wakes up from a sleep or hibernate state. Authentication may also be lost when an accessory is detached and accordingly, the authentication for the accessory may be repeated upon reattachment to the host computing device.

The power controller 112 may be configured to switch to external power source supplied by a power adapter if available. For instance, the power controller 112 may detect presence of the power adapter and shift the operating power source from battery power to the power adapter in response to the detection. This enables charging of batteries when excess power is available from the external supply. Charging of both an internal battery and an accessory battery of an authorized accessory may be supported. Further, both an internal and accessory batteries may be charged simultaneously if sufficient power is available. If the system is currently being powered from the power adapter, the system may terminate battery charging and shift back to operation on battery power when the power adapter is disconnected or power from the adapter is otherwise interrupted.

The accessory battery associated with an authorized accessory is an optional power source for the operation of the computing device 102 and as a power source for the accessory device 104 itself. The accessory battery may supplement the internal battery when power is not available via a power adapter/external source. In one approach, the power controller 112 is configured to selectively cause switching between the internal battery and an accessory battery based upon charge level of the batteries. In this approach, the system may be arranged to employ the batteries one at a time. In addition or alternatively, the system may be configured to employ power supplied simultaneously by the internal and external accessory battery in some scenarios.

The power controller 112 may be further configured to control the way in which multiple available batteries (e.g., internal and accessory) are charged and discharged according to the power management scheme. Discharging and charging may be managed in various ways based at least in part upon the charge levels of the available batteries. By way of example and not limitation, the power management scheme may be designed to generally prioritize maintaining the charge level of the internal battery over accessory batteries.

In this approach, the system uses power from accessory batteries before discharging the main internal battery. The discharge of batteries may occur sequentially in a number of discharge stages that correspond to designated charge capacity levels or percentages. For example, an accessory battery may first be discharged to a level defined as "critical," such as five or ten percent remaining charge. Then, the system may switch to using the main internal battery and discharge it to the critical level. The load may again be shifted back to the accessory battery when both batteries are at the critical level. The accessory battery may be further discharged to a "discontinue" level (e.g., two percent remaining charge) defined as point at which the system discontinues use of the battery. The power controller 112 may then cause a switch back to the main internal battery, which is similarly discharged to the discontinue level. When both batteries have reached the discontinue level, the computing device 102 may transition to a shutdown state.

For charging, both batteries may be charged simultaneous if there is sufficient power to do so. If available power is not sufficient to support simultaneous charging, the power controller 112 may implement sequential charging with priority again being given to charging of the main internal battery. Similar to the discharge techniques just described, charging of multiple batteries may also occur in multiple stages that correspond to selected charge levels or percentages. For example, the main internal battery may be charged first to a designated "pre-charge" level, such as seventy or eighty percent. Then charging switches to the accessory battery, which is also charged to the designated pre-charge level. After this, the main internal battery is first topped-off to complete the charge to a "full charge" level and then the accessory battery is also topped-off to complete the charge to the full charge level. Naturally, the described stages, levels, and selected percentages for discharging and charging are provided as examples. Various alternative implementations may employ different numbers of stages and/or different selected charge percentages for the stages in a comparable manner.

Having considered the foregoing example procedures, consider now a discussion of example systems and devices that may be employed to implement aspects of accessory device authentication techniques in one or more embodiments.

### Example System and Device

FIG. 6 illustrates an example system generally at 600 that includes an example computing device 602 that is representative of one or more computing systems and/or devices that may implement the various techniques described herein. The computing device 602 may be, for example, be configured to assume a mobile configuration through use of a housing formed and size to be grasped and carried by one or more hands of a user, illustrated examples of which include a mobile phone, mobile game and music device, and tablet computer although other examples are also contemplated.

The example computing device 602 as illustrated includes a processing system 604, one or more computer-readable media 606, and one or more I/O interface 608 that are communicatively coupled, one to another. Although not shown, the computing device 602 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 604 is representative of functionality to perform one or more operations using hardware. Accordingly, the processing system 604 is illustrated as including hardware element 610 that may be configured as processors, functional blocks, and so forth. This may include implementation in hardware as an application specific integrated circuit or other logic device formed using one or more semiconductors. The hardware elements 610 are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically-executable instructions.

The computer-readable storage media 606 is illustrated as including memory/storage 612. The memory/storage 612 represents memory/storage capacity associated with one or more computer-readable media. The memory/storage component 612 may include volatile media (such as random access memory (RAM)) and/or nonvolatile media (such as read only memory (ROM), Flash memory, optical disks, magnetic disks, and so forth). The memory/storage component 612 may include fixed media (e.g., RAM, ROM, a fixed hard drive, and so on) as well as removable media (e.g., Flash memory, a removable hard drive, an optical disc, and so forth). The computer-readable media 606 may be configured in a variety of other ways as further described below.

Input/output interface(s) 608 are representative of functionality to allow a user to enter commands and information to computing device 602, and also allow information to be presented to the user and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., which may employ visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 602 may be configured in a variety of ways to support user interaction.

The computing device 602 is further illustrated as being communicatively and physically coupled to an accessory device 614 that is physically and communicatively removable from the computing device 602. In this way, a variety of different input devices may be coupled to the computing device 602 having a wide variety of configurations to support a wide variety of functionality. In this example, the accessory device 614 includes one or more controls 616, which may be configured as press-sensitive keys, mechanically switched keys, buttons, and so forth.

The accessory device 614 is further illustrated as include one or more modules 618 that may be configured to support a variety of functionality. The one or more modules 618, for instance, may be configured to process analog and/or digital signals received from the controls 616 to determine whether an input was intended, determine whether an input is indicative of resting pressure, support authentication of the accessory device 614 for operation with the computing device 602, and so on.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques may be implemented on a variety of commercial computing platforms having a variety of processors.

An implementation of the described modules and techniques may be stored on or transmitted across some form of computer-readable media. The computer-readable media may include a variety of media that may be accessed by the computing device 602. By way of example, and not limitation, computer-readable media may include "computer-readable storage media" and "computer-readable signal media."

"Computer-readable storage media" may refer to media and/or devices that enable persistent and/or non-transitory storage of information in contrast to mere signal transmission, carrier waves, or signals per se. Thus, computer-readable storage media refers to non-signal bearing media. The computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Computer-readable signal media" may refer to a signal-bearing medium that is configured to transmit instructions to the hardware of the computing device 602, such as via a network. Signal media typically may embody computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 610 and computer-readable media 606 are representative of modules, programmable device logic and/or fixed device logic implemented in a hardware form that may be employed in some embodiments to implement at least some aspects of the techniques described herein, such as to perform one or more instructions. Hardware may include components of an integrated circuit or on-chip system, microcontroller devices, an application-specific integrated circuit (ASIC), a field-programmable gate array (FPGA), a complex programmable logic device (CPLD), and other implementations in silicon or other hardware. In this context, hardware may operate as a processing device that performs program tasks defined by instructions and/or logic embodied by the hardware as well as a hardware utilized to store instructions for execution, e.g., the computer-readable storage media described previously.

Combinations of the foregoing may also be employed to implement various techniques described herein. Accordingly, software, hardware, or executable modules may be implemented as one or more instructions and/or logic embodied on some form of computer-readable storage media and/or by one or more hardware elements 610. The computing device 602 may be configured to implement particular instructions and/or functions corresponding to the software and/or hardware modules. Accordingly, implementation of a module that is executable by the computing device 602 as software may be achieved at least partially in hardware, e.g., through use of computer-readable storage media and/or hardware elements 610 of the processing system 604. The instructions and/or functions may be executable/operable by one or more articles of manufacture (for example, one or more computing devices 602 and/or processing systems 604) to implement techniques, modules, and examples described herein.

### Conclusion

Although the example implementations have been described in language specific to structural features and/or methodological acts, it is to be understood that the implementations defined in the appended claims is not necessarily limited to the specific features or acts described. Rather, the specific features and acts are disclosed as example forms of implementing the claimed features.

## Claims

1. A method implemented by a host computing device (602) comprising:
detecting (502) connection of an accessory device (614) to the host computing device (602), the accessory device (614) having no battery;
authenticating (504) the accessory device (614) to determine authorization of the accessory device (614) for power exchange with the host computing device (602); and
upon successful authentication of the accessory device (614), authorizing (506) power exchange with the accessory device (614); and
supplying (510) supplemental power from one or more batteries of the host computing device (602) to the authorized accessory device (614) when power exchange with the accessory device (614) is authorized,
wherein the host computing device (602) is enabled to perform authenticating (504) and the supplying (510) even if the host computing device (602) is in a low power mode.

2. A method as described in claim 1, further comprising:
when authentication of the accessory device (614) is not successful, restricting power exchange with the accessory device (614).

3. A method as described in claim 1, wherein the authenticating comprises:
requesting credentials (116) from the accessory device (614) via a communication channel established via the connection;
obtaining the credentials (116) supplied by the accessory device (614); and
verifying the credentials (116) by checking the credentials (116) against known credentials (116) for authorized devices.

4. A method as described in claim 1, wherein the exchanging and authenticating are performed responsive to connection of the accessory device (614) to the host computing device (602) via an interface, the interface creating a physical and communicative coupling of the accessory device (614) to the host computing (602).

5. A method as described in claim 1, further comprising: upon successful authentication of the accessory device (614), determining that the accessory device (614) lacks sufficient power to operate; and supplying the supplemental power from the host computing device (602) for operation of the accessory device (614).

6. A host computing device (602) comprising:
an interface configured to enable connection of one or more accessory devices (614) to the host computing device (602) at different times;
one or more microcontrollers configured to implement: a power controller and an authentication module,
the authentication module operable to determine that the one or more accessory devices (614) has no battery and authenticate the one or more accessory devices (614) responsive to connection of the accessory devices (614) to the interface and expose results of the authentication to the power controller for subsequent power management decisions,
the power controller operable to control power exchange between one or more batteries of the host device (602) and the one or more accessory devices (614) based at least in part upon the results of the authentication including:
authorizing power exchange with devices of the one or more accessory devices (614) for which authentication is successful;
restricting power exchange with devices of the one or more accessory devices (614) for which authentication is not successful; and
supplying (510) supplemental power to the devices of the one or more accessory devices (614) for which authentication is successful,
wherein the power controller and the authentication module are configured to perform authentication and the power management tasks even if the host computing device (602) is in a low power mode.

7. A host computing device (602) as described in claim 6, wherein the power controller is further operable to allow limited exchange of power between the host computing device (602) and the one or more accessory devices (614) prior to authentication of the one or more accessory devices (614) to enable operation of the one or more microcontrollers to perform the authentication.

8. A host computing device (602) as described in claim 7, wherein the interface is configured to create a physical coupling and a communicative coupling of a particular accessory device when attached to the host computing device (602), the communicative coupling creating a communication channel between the one or more microcontrollers of the host computing device (602) and a microcontroller of the particular accessory device through which credentials of the particular accessory device are conveyed to enable the authentication module to authenticate the particular accessory device.

9. A host computing device (602) as described in claim 7, wherein the power controller and authentication module are implemented via two different microcontrollers of the host computing device (602).

## Patentansprüche

1. Von einer Host-Computervorrichtung (602) implementiertes Verfahren, umfassend:
Erkennen (502) des Anschlusses einer Zusatzvorrichtung (614) an die Host-Computervorrichtung (602), wobei die Zusatzvorrichtung (614) keine Batterie hat;
Authentifizieren (504) der Zusatzvorrichtung (614), um die Autorisierung der Zusatzvorrichtung (614) zum Energieaustausch mit der Host-Computervorrichtung (602) zu bestimmen; und
nach erfolgreicher Authentifizierung der Zusatzvorrichtung (614) Autorisieren (506) des Energieaustauschs mit der Zusatzvorrichtung (614); und
Liefern (510) zusätzlicher Energie aus einer oder mehreren Batterien der Host-Computervorrichtung (602) an die autorisierte Zusatzvorrichtung (614), wenn der Energieaustausch mit der Zusatzvorrichtung (614) autorisiert ist,
wobei die Host-Computervorrichtung (602) in die Lage versetzt wird, das Authentifizieren (504) und Liefern (510) selbst dann durchzuführen, wenn sich die Host-Computervorrichtung (602) in einem Niedrigenergiemodus befindet.

2. Verfahren nach Anspruch 1, ferner umfassend:
wenn die Authentifizierung der Zusatzvorrichtung (614) nicht erfolgreich ist, Einschränken des Energieaustauschs mit der Zusatzvorrichtung (614).

3. Verfahren nach Anspruch 1, wobei das Authentifizieren umfasst:
Anfordern von Berechtigungsnachweisen (116) von der Zusatzvorrichtung (614) über einen über den Anschluss aufgebauten Kommunikationskanal;
Erhalten der Berechtigungsnachweise (116), die von der Zusatzvorrichtung (614) bereitgestellt werden; und
Verifizieren der Berechtigungsnachweise (116), indem die Berechtigungsnachweise (116) mit bekannten Berechtigungsnachweisen (116) für autorisierte Vorrichtungen verglichen werden.

4. Verfahren nach Anspruch 1, wobei das Austauschen und Authentifizieren in Reaktion auf den Anschluss der Zusatzvorrichtung (614) an die Host-Computervorrichtung (602) über eine Schnittstelle durchgeführt werden, wobei die Schnittstelle eine physische und kommunikationsfähige Kopplung der Zusatzvorrichtung (614) mit der Host-Computervorrichtung (602) herstellt.

5. Verfahren nach Anspruch 1, ferner umfassend: nach erfolgreicher Authentifizierung der Zusatzvorrichtung (614) Bestimmen, dass der Zusatzvorrichtung (614) nicht genügend Energie zum Betrieb zur Verfügung steht; und Liefern der zusätzlichen Energie von der Host-Computervorrichtung (602) zum Betrieb der Zusatzvorrichtung (614).

6. Host-Computervorrichtung (602), umfassend:
eine Schnittstelle, die dafür ausgelegt ist, den Anschluss einer oder mehrerer Zusatzvorrichtungen (614) an die Host-Computervorrichtung (602) zu verschiedenen Zeiten zu ermöglichen;
einen oder mehrere Mikrocontroller, die ausgelegt sind zum Implementieren: einer Energiesteuereinheit und eines Authentifizierungsmoduls,
wobei das Authentifizierungsmodul dazu betreibbar ist zu bestimmen, dass die ein oder mehreren Zusatzvorrichtungen (614) keine Batterie haben, und die ein oder mehreren Zusatzvorrichtungen (614) zu authentifizieren, in Reaktion auf den Anschluss der Zusatzvorrichtungen (614) an die Schnittstelle, und die Ergebnisse der Authentifizierung der Energiesteuereinheit für nachfolgende Energiemanagement-Entscheidungen bereitzustellen,
wobei die Energiesteuereinheit dazu betreibbar ist, den Energieaustausch zwischen einer oder mehreren Batterien der Host-Vorrichtung (602) und den ein oder mehreren Zusatzvorrichtungen (614) wenigstens teilweise basierend auf den Ergebnissen der Authentifizierung zu steuern, einschließlich:
Autorisieren des Energieaustauschs mit Vorrichtungen der ein oder mehreren Zusatzvorrichtungen (614), für die die Authentifizierung erfolgreich ist;
Einschränken des Energieaustauschs mit Vorrichtungen der ein oder mehreren Zusatzvorrichtungen (614), für die die Authentifizierung nicht erfolgreich ist; und
Liefern (510) von zusätzlicher Energie an die Vorrichtungen der ein oder mehreren Zusatzvorrichtungen (614), für die die Authentifizierung erfolgreich ist, wobei die Energiesteuereinheit und das Authentifizierungsmodul dafür ausgelegt sind, die Authentifizierung und die Energieverwaltungsaufgaben auch dann durchzuführen, wenn sich die Host-Computervorrichtung (602) in einem Niedrigenergiemodus befindet.

7. Host-Computervorrichtung (602) nach Anspruch 6, wobei die Energiesteuereinheit ferner dazu betreibbar ist, einen begrenzten Energieaustausch zwischen der Host-Computervorrichtung (602) und den ein oder mehreren Zusatzvorrichtungen (614) vor der Authentifizierung der ein oder mehreren Zusatzvorrichtungen (614) zuzulassen, um den Betrieb der ein oder der mehreren Mikrocontroller zur Durchführung der Authentifizierung zu ermöglichen.

8. Host-Computervorrichtung (602) nach Anspruch 7, wobei die Schnittstelle dafür ausgelegt ist, eine physische Kopplung und eine kommunikationsfähige Kopplung einer bestimmten Zusatzvorrichtung herzustellen, wenn sie an die Host-Computervorrichtung (602) angeschlossen wird, wobei die kommunikationsfähige Kopplung einen Kommunikationskanal zwischen den ein oder mehreren Mikrocontrollern der Host-Computervorrichtung (602) und einem Mikrocontroller der bestimmten Zusatzvorrichtung herstellt, über den Berechtigungsnachweise der bestimmten Zusatzvorrichtung übermittelt werden, um es dem Authentifizierungsmodul zu ermöglichen, die bestimmte Zusatzvorrichtung zu authentifizieren.

9. Host-Computervorrichtung (602) nach Anspruch 7, wobei die Energiesteuereinheit und das Authentifizierungsmodul über zwei verschiedene Mikrocontroller der Host-Computervorrichtung (602) implementiert sind.

## Revendications

1. Procédé mis en œuvre par un dispositif informatique hôte (602) comprenant les étapes suivantes :
détecter (502) la connexion d'un dispositif accessoire (614) au dispositif informatique hôte (602), le dispositif accessoire (614) n'ayant pas de batterie ;
authentifier (504) le dispositif accessoire (614) afin de déterminer l'autorisation du dispositif accessoire (614) quant à l'échange d'énergie avec le dispositif informatique hôte (602) ; et
après authentification réussie du dispositif accessoire (614), autoriser (506) l'échange d'énergie avec le dispositif accessoire (614) ; et
fournir (510) de l'énergie supplémentaire à partir d'une ou plusieurs batteries du dispositif informatique hôte (602) au dispositif accessoire autorisé (614) lorsque l'échange d'énergie avec le dispositif accessoire (614) est autorisé,
où le dispositif informatique hôte (602) est capable d'effectuer l'authentification (504) et la fourniture d'énergie (510) même si le dispositif informatique hôte (602) est dans un mode de faible consommation.

2. Procédé tel que décrit dans la revendication 1, comprenant en outre l'étape suivante :
lorsque l'authentification du dispositif accessoire (614) n'est pas réussie, restreindre l'échange d'énergie avec le dispositif accessoire (614).

3. Procédé tel que décrit dans la revendication 1, dans lequel l'authentification comprend les étapes suivantes :
demander des justificatifs d'identité (116) au dispositif accessoire (614) par l'intermédiaire d'un canal de communication établi par l'intermédiaire de la connexion ;
obtenir les justificatifs d'identité (116) fournis par le dispositif accessoire (614) ; et
vérifier les justificatifs d'identité (116) en comparant les justificatifs d'identité (116) à des justificatifs d'identité connus (116) pour des dispositifs autorisés.

4. Procédé tel que décrit dans la revendication 1, dans laquelle l'échange et l'authentification sont effectués en réponse à la connexion du dispositif accessoire (614) au dispositif informatique hôte (602) par l'intermédiaire d'une interface, l'interface créant un couplage physique et de communication du dispositif accessoire (614) à l'ordinateur hôte (602).

5. Procédé tel que décrit dans la revendication 1, comprenant en outre les étapes suivantes : après authentification réussie du dispositif accessoire (614), déterminer que le dispositif accessoire (614) ne dispose pas d'une énergie suffisante pour fonctionner ; et fournir l'énergie supplémentaire à partir du dispositif informatique hôte (602) pour faire fonctionner le dispositif accessoire (614).

6. Dispositif informatique hôte (602) comprenant :
une interface configurée pour permettre la connexion d'un ou de plusieurs dispositifs accessoires (614) au dispositif informatique hôte (602) à différents moments ;
un ou plusieurs microcontrôleurs configurés pour mettre en œuvre : un contrôleur de puissance et un module d'authentification,
le module d'authentification permettant de déterminer que les un ou plusieurs dispositifs accessoires (614) n'ont pas de batterie et d'authentifier les un ou plusieurs dispositifs accessoires (614) en réponse à la connexion des dispositifs accessoires (614) à l'interface et d'exposer les résultats de l'authentification au contrôleur de puissance pour des décisions ultérieures de gestion d'énergie,
le contrôleur de puissance permettant de contrôler l'échange d'énergie entre une ou plusieurs batteries du dispositif hôte (602) et les un ou plusieurs dispositifs accessoires (614) sur la base, au moins en partie, des résultats de l'authentification, le contrôle comprenant :
l'autorisation de l'échange d'énergie avec des dispositifs des un ou plusieurs dispositifs accessoires (614) pour lesquels l'authentification est réussie ;
la restriction de l'échange d'énergie avec des dispositifs des un ou plusieurs dispositifs accessoires (614) pour lesquels l'authentification n'a pas réussi ; et
la fourniture (510) d'énergie supplémentaire aux dispositifs des un ou plusieurs dispositifs accessoires (614) pour lesquels l'authentification est réussie,
où le contrôleur de puissance et le module d'authentification sont configurés pour effectuer les tâches d'authentification et de gestion d'énergie même si le dispositif informatique hôte (602) est dans un mode de faible consommation.

7. Dispositif informatique hôte (602) tel que décrit dans la revendication 6, dans lequel le contrôleur de puissance est en outre utilisable pour permettre un échange limité de puissance entre le dispositif informatique hôte (602) et les un ou plusieurs dispositifs accessoires (614) avant l'authentification des un ou plusieurs dispositifs accessoires (614) pour permettre de faire fonctionner les un ou plusieurs microcontrôleurs pour effectuer l'authentification.

8. Dispositif informatique hôte (602) tel que décrit dans la revendication 7, dans lequel l'interface est configurée pour créer un couplage physique et un couplage de communication d'un dispositif accessoire particulier lorsqu'il est connecté au dispositif informatique hôte (602), le couplage de communication créant un canal de communication entre les un ou plusieurs microcontrôleurs du dispositif informatique hôte (602) et un microcontrôleur du dispositif accessoire particulier par lequel les justificatifs d'identité du dispositif accessoire particulier sont transmis pour permettre au module d'authentification d'authentifier le dispositif accessoire particulier.

9. Dispositif informatique hôte (602) tel que décrit dans la revendication 7, dans lequel le contrôleur de puissance et le module d'authentification sont mis en œuvre par l'intermédiaire de deux microcontrôleurs différents du dispositif informatique hôte (602).
